# EUROPÄISCHE PATENTSCHRIFT

(11) **EP 3 964 726 B1**
(45) Veröffentlichungstag und Bekanntmachung des Hinweises auf die Patenterteilung: **21.02.2024**
(21) Anmeldenummer: 21192788.4
(22) Anmeldetag: 24.08.2021
(51) Int. Cl.: F16D 1/108, F16D 3/223, B60B 27/00, F16C 35/063, F16C 19/18

(54) **STECKVERZAHNUNG UND VERFAHREN ZUR HERSTELLUNG EINES ACHSZAPFENS EINER STECKVERZAHNUNG**
SPLINED COUPLING AND METHOF OF MANUFACTURING A SPLINED SHAFT STUB
ACCOUPLEMENT CANNELÉ ET PROCÉDÉ DE FABRICATION D'UN MANETON D'ESSIEU CANNELÉ

(30) Priorität: 04.09.2020 DE 102020211158
(43) Veröffentlichungstag der Anmeldung: 09.03.2022
(73) Patentinhaber: VOLKSWAGEN AG, 38440 Wolfsburg (DE)
(72) Erfinder: Schaaf, Gregor, 38162 Cremlingen (DE); Heise, Wolfgang, 38442 Wolfsburg (DE); Schäfer, Georg, 38479 Tappenbeck (DE); Holzfuß, Paul, 38102 Braunschweig (DE)

(56) Entgegenhaltungen:
- EP-A1- 0 318 266
- EP-A1- 2 980 433
- DE-A1-102005 035 706
- DE-C2- 4 302 726
- FR-A1- 3 081 378
- JP-A- 2001 323 920
- SU-A1- 694 690
- US-A1- 2017 355 226

## Beschreibung

Die Erfindung bezieht sich auf eine Passverbindung mit den Merkmalen des Oberbegriffs von Patentanspruch 1.

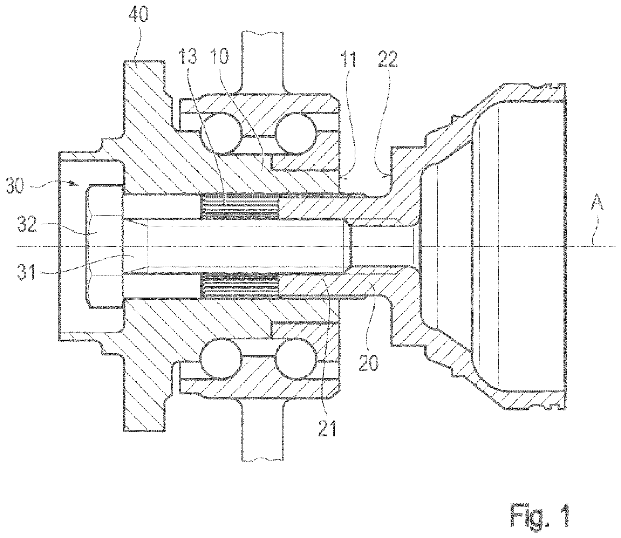

Passverbindungen umfassend eine Nabe mit einem Verzahnungsprofil am Innenumfang, einen Achszapfen mit einem Verzahnungsprofil an einem Außenumfangsabschnitt sowie einer Schulter zur axialen Anlage gegen die Nabe, und eine Spanneinrichtung zum axialen Verspannen des Achszapfens mit der Nabe Passverbindungen kommen üblicherweise im Fahrzeugbau zum Einsatz, um beispielsweise eine Antriebsgelenkwelle mit einem angetriebenen Fahrzeugrad zu verbinden. Hierbei wird der Achszapfen der Antriebsgelenkwelle mittels eines Schraubverbands gegen die Nabe eines Radlagers verspannt, wie dies in Figur 1 beispielhaft dargestellt ist. Der Schraubverband kann dabei an einem Kurzachszapfen vorgesehen sein, indem eine Befestigungsschraube als Spanneinrichtung in eine Stirnseite des Achszapfens eingeschraubt wird, wie dies in Figur 1 gezeigt ist, oder aber an einem Langachszapfen mit Außengewinde, auf welchen eine Mutter als Spanneinrichtung aufgeschraubt wird. Auch andere Spanneinrichtungen sind möglich.

In allen Fällen bewirkt die Spanneinrichtung eine axiale Abstützung und/oder Anlage des Achszapfens gegen die Nabe des Radlagers. An dem Achszapfen ist hierzu eine entsprechende Schulter ausgebildet. In einer üblichen Ausführung wird eine Vorspannung des Radlagers durch die Spanneinrichtung realisiert, wobei die Schulter des Achszapfens direkt am fahrzeugseitig innenliegenden Lagerinnenring anliegt. Es bestehen jedoch auch Ausführungen, bei denen das Radlager bereits durch eine Umformung der Radnabe verspannt wird. In diesem Fall liegt die Schulter des Achszapfens an der umgeformten Seite der Radnabe an.

Die Drehmomentübertragung von der Antriebsgelenkwelle zum Fahrzeugrad erfolgt bestimmungsgemäß über die Verzahnungsprofile am Achszapfen und an der Radnabe. Durch die beschriebene axiale Verspannung wird jedoch über Reibung auch an der Schulterfläche des Achszapfens Drehmoment übertragen. An dieser Stelle kann es zu ungewünschten akustischen Effekten kommen, wenn das Drehmoment die Haftreibung überwindet und eine schlagartige kleine Relativbewegung zwischen der Schulter und der diese abstützenden Gegenfläche entsteht. Dieses Geräusch ist als Anfahrknacken oder "Ping Noise" bekannt.

Insbesondere wenn ein Rutschen auch in entgegengesetzter Richtung erfolgt, beispielsweise beim Rückwärtsfahren oder durch Schubmomente, wie sie bei Fahrzeugen mit elektrischem Antrieb im Rekuperationsbetrieb entstehen, kann dieses Geräusch wiederholt auftreten. Durch den Trend zu höheren Raddrehmomenten (große Räder und/oder große Motordrehmomente) und wegen der Rekuperation bei Fahrzeugen mit elektrischem Antrieb verschärft sich diese Problematik.

An dieser Stelle bieten sich grundsätzlich folgende Problemlösungen an.

Zum einen kann die Reibung an der Achszapfenschulter so stark erhöht werden, dass kein Rutschen mehr auftritt. Dies wäre beispielsweise möglich durch sehr raue, ölfreie Oberflächen oder durch Zwischenlagen von Diamantfließ oder Diamantscheiben.

Zum anderen kann die Reibung an der Achszapfenschulter soweit verringert werden, dass beim Rutschen kein Geräusch mehr auftritt. Dies wäre beispielsweise möglich durch beschichtete Scheiben mit geringem Reibwert als Zwischenlage.

Überdies besteht drittens die Möglichkeit, die Passverbindung spielfrei auszuführen, so dass kein Lösen und damit kein Anschlagen der Bauteile mehr auftreten kann. Dies ist beispielsweise möglich durch Verkleben, was jedoch einen Zusatzaufwand bei der Montage und im Kundendienstfall bedeutet, sowie durch eine Pressung in der Verzahnung.

Die Spielfreiheit durch Verpressung ist aus wirtschaftlicher Sicht der erstrebenswerte Lösungsweg, da er ohne zusätzliche Stoffe und Bauteile auskommt.

Für einen wirtschaftlichen Montageprozess sind allerdings zusätzliche Hilfsmittel und Pressvorrichtungen zu vermeiden. Daher besteht die Herausforderung darin, eine ausreichende Pressung zu realisieren und dennoch sicherzustellen, dass die Bauteile "von Hand" fügbar sind.

Aus dem Stand der Technik sind verschieden Lösungsansätze zum Fügen solcher Passverbindungen bekannt.

DE 14 25 231 A beschreibt eine Zahnwellenverbindung für die drehfeste Verbindung einer Achswelle eines Kraftfahrzeugs mit einem Antriebszahnrad. Diese Zahnwellenverbindung weist über die axiale Verzahnungslänge ein sich stetig vergrößerndes Zahnflankenspiel aufweist.

Dazu sind die Zahnlücken des Verzahnungsprofils entweder der Welle oder Nabe in Längsrichtung der Verzahnung stetig erweitert. Hierzu wird bei der Herstellung der Welle bzw. der Nabe die Vorschubrichtung des zur Herstellung dieser Zahnlücken verwendeten Werkzeugs schräg zur Wellenachse ausgerichtet. Eine solche Herstellung ist allerdings fertigungstechnisch sehr aufwändig und in der Serienfertigung unwirtschaftlich.

DE 26 56 946 A1 beschreibt eine Zahnwellenverbindung, bei der die Zähne und Gegenzähne wenigstens für einen kleinen Abschnitt der Verzahnungslänge der Zahnwellenverbindung annähernd gleichmäßig spielfrei ineinandergreifen, während im verbleibenden Bereich Spiel besteht. Bei dieser bekannten Zahnwellenverbindung sind die Zähne und Zahnlücken des Verzahnungsprofils der Nabe über die ganze Verzahnungslänge konstant. Die Zähne der längsverzahnten Welle sind dagegen nur in einem an der außenseitigen Stirnseite der Nabe beginnenden ersten Abschnitt gleichbleibend dick und werden anschließend zur anderen Nabenseite hin zunehmend schmaler. Eine Montage von Hand ist hier unmöglich.

DE 43 02 726 C2 schlägt eine Passverbindung der eingangs zwischen einem Achszapfen und einer Radnabe eines angetriebenen Kraftfahrzeugrads vor, bei welcher die Zähne und Zahnlücken des Verzahnungsprofils an dem Achszapfen über die gesamte Verzahnungslänge konstant sind. Hingegen ist das Verzahnungsprofil der Nabe von der der Kraftflussrichtung entgegenweisenden Seite her über lediglich einen ersten Abschnitt der Verzahnungslänge gestaucht, so dass in diesem ersten Abschnitt die Zähne des Achszapfens in die Gegenzahnlücken der Nabe eingepresst sind. Die Stauchung wird durch Eindrücken einer Kugel in die Nabe hergestellt, was allerdings einigermaßen aufwändig ist. Dafür ist ein anfänglich einfaches Einschieben des Achszapfens in die Nabe möglich, welches im Rahmen einer automatisierten Montage ohne besonderen Zentrieraufwand - weil spielbehaftet - erfolgen kann. Das Verpressen im ersten Abschnitt kann durch Betätigen einer Befestigungsschraube erfolgen, mittels welcher der Achszapfen axial mit der Nabe verspannt wird.

Wie bereits erwähnt, ist in DE 43 02 726 C2 jedoch der Fertigungsprozess für die Herstellung des Verzahnungsprofils an der Nabe problematisch. Zudem ist der spielfreie Bereich des Verzahnungseingriffs durch einen spielbehafteten Bereich axial von der Anlageschulter des Achszapfens beabstandet. Im Rahmen dieses Spiels ist eine geringfügige Relativbewegung zwischen der Anlageschulter des Achszapfens und der Nabe aufgrund von Torsion der Bauteile weiterhin möglich, d.h. die eingangs geschilderte Problematik einer Geräuschbildung im Sinne eines Anfahrknackens oder "Ping Noises" besteht hier fort.

In der Praxis haben sich derzeit Passverzahnungen durchgesetzt, die auf dem Achszapfen einen kleinen Helixwinkel aufweisen, d.h. das Verzahnungsprofil bleibt hierbei entlang der Verzahnungslänge zwar konstant, windet sich jedoch in der Art einer Schraubenlinie (Helix) um die Längsachse des Achszapfens. Dieser Helixwinkel kann sich über die gesamte Verzahnungslänge erstrecken. Der Anmelderin sind jedoch auch Ausführungen bekannt, insbesondere bei Langachszapfen, bei denen in einem ersten Abschnitt eine gerade Verzahnung und in einem zweiten Abschnitt eine Verzahnung mit Helix realisiert ist oder ein erster Abschnitt gegenüber einem zweiten Abschnitt einen Winkelversatz aufweist.

Angesichts der Anforderungen von Fahrzeugen mit elektrischem Antrieb, welche oftmals hohe Anfahrmomente und große Räder aufweisen und dementsprechend eine hohe Pressung in der Verzahnung benötigen, um das oben erläuterte Rutschen und die damit verbundene Geräuschbildung zu vermeiden, wird es schwieriger einen wirtschaftlichen Herstellprozess unter den beiden Randbedingung "von Hand fügbar" und hohe Pressung im verschraubten Zustand zu realisieren. Die Fertigungstoleranzen für die Passverzahnungen müssten dafür sehr weit eingeschränkt werden, was eine aufwändige, teure Herstellung zur Folge hätte.

Der Helixwinkel führt außerdem zu unterschiedlichen Eigenschaften in der Kraftübertragung je nach Drehmomentrichtung, was für die Auslegung der Schnittstelle hinsichtlich Robustheit nachteilig ist.

Eine Passverbindung mit den Merkmalen des Oberbegriffs von Patentanspruch 1 ist aus DE 10 2005 035 706 A1 bekannt.

Weitere Passverbindungen aus EP 2 980 433 A1 und FR 3 081 378 A1 bekannt
Vor diesem Hintergrund liegt der Erfindung die Aufgabe zugrunde, Alternativen für eine gattungsgemäße Pressverbindung aufzuzeigen, welche einerseits das Problem einer Geräuschbildung bei Lastwechseln mindern und es andererseits ermöglichen, unter Berücksichtigung einer wirtschaftlichen, großserientaugliche Fertigung eine hohe Pressung zu realisieren und dennoch sicherzustellen, dass die Bauteile von Hand, d.h. ohne zusätzliche Presseinrichtungen, fügbar sind.

Diese Aufgabe wird durch eine Pressverbindung gemäß Patentanspruch 1 gelöst.

Die erfindungsgemäße Lösung ermöglicht ein manuelles Einführen des Achszapfens in die Nabe, ohne dass hierzu eine Presseinrichtung erforderlich wäre. Durch axiales Verspannen des Achszapfens mit der Nabe mittels der Spanneinrichtung wird der zweite Abschnitt mit dem Verzahnungsprofil der Nabe in Eingriff gebracht und hierdurch jegliches Spiel in der Passverbindung aufgehoben. Die oben erläuterte Geräuschbildung wird zuverlässig unterbunden, zumal der zweite Abschnitt näher zur Schulter des Achszapfens gelegen ist, als der erste Abschnitt, wodurch kein nennenswerte Verdrehung des Achszapfen unter Drehmoment entsteht.. Ein geringer Abstand und eine folglich hohe Torsionssteifigkeit zwischen der Schulter und dem Ort der Drehmomenteinleitung in die Passverzahnung, d.h. im zweiten Abschnitt, wird dieser Zielsetzung gerecht. Im Vergleich zu DE 43 02 726 C2 ist zudem der Fertigungsaufwand deutlich geringer, da das Verzahnungsprofil an dem Außenumfangsabschnitt des Achszapfens einfacher, insbesondere durch Walzen, hergestellt werden kann. Erst dies ermöglicht eine großserientaugliche wirtschaftliche Fertigung.

An dem zweiten Abschnitt werden die Lücken zwischen den Zähnen des Verzahnungsprofils in Längsrichtung der Verzahnung kontinuierlich kleiner. Dies lässt sich beispielsweise mit einer entsprechend konturierten Profilwalze sehr effizient herstellen.

Besondere Ausführungsarten der Erfindung sind Gegenstand weiterer Patentansprüche.

Insbesondere können die in Längsrichtung des Verzahnungsprofils kleiner werdenden Lücken zwischen den Zähnen durch Materialzunahme am Zahnfuss und/oder an den Zahnflanken bewirkt werden.

Für eine ausreichend hohe Pressung bei der zweiten besonderen Ausführungsart empfiehlt es sich, dass die maximale Verkleinerung der Lücken zwischen den Zähnen am zweiten Abschnitt im Bereich des 0,05- bis 0,35-fachen des Verzahnungsmoduls am ersten Abschnitt liegt.

Weiterhin kann optional bei allen Ausführungsarten dem Verzahnungsprofil in Längsrichtung der Verzahnung an der Nabe und/oder am ersten und/oder zweiten Abschnitt des Achszapfens ein Helixwinkel überlagert sein, welcher vorzugsweise im Bereich von 4 bis 20 Bogenminuten liegt.

Die oben genannte Aufgabe wird weiterhin durch ein Verfahren gemäß Patentanspruch 7 gelöst. Die Walze oder der Walzbalken weist ein negatives Verzahnungsprofil auf, welches im Bereich für den zweiten Abschnitt von dem Bereich für den ersten Abschnitt ausgehend tiefer werdend eingeschnitten ist

Dies gestattet eine besonders wirtschaftliche, großserientaugliche Fertigung, wobei hervorzuheben ist, dass die Formgebung des Verzahnungsprofils am Achszapfen bei dieser Ausführungsvariante in einem einzigen Fertigungsschritt erfolgt.

Sämtliche Verzahnungsprofile werden nach der Formgebung gehärtet.

Nachfolgend wird die Erfindung anhand eines in der Zeichnung dargestellten Ausführungsbeispiels näher erläutert. Die Zeichnung zeigt in:
- Figur 1: eine Längsschnittansicht durch eine Passverbindung zwischen einer Antriebswelle und einem Kraftfahrzeugrad zur Veranschaulichung eines Beispiels einer möglichen Einbausituation,
- Figur 2: ein Ausführungsbeispiel eines Achszapfens nach der Erfindung,
- Figur 3: eine Detailansicht der Verzahnungsgeometrie des Achszapfen gemäß Fig. 2, und in
- Figur 4: ein Prinzipbild zur Veranschaulichung eines Helixwinkels einer Verzahnung.

Figur 1 zeigt beispielhaft die Einbausituation einer erfindungsgemäßen Passverbindung. Zu erkennen ist ein Radlager 1 eines Kraftfahrzugrads mit einer Nabe 10 sowie ein Gelenkaußenteil 2 eines Gleichlaufgelenks einer Seitenwelle mit einem Achszapfen 20.

Der Achszapfen 20 ist axial in die Nabe 10 eingeführt und mittels einer Spannrichtung 30 axial gegen die Nabe 10 verspannt. Vorliegend ist als Spanneinrichtung 30 beispielhaft eine Befestigungsschraube 31 dargestellt, welche sich mit einem Kopf 32 gegen einen Radflansch 40 und über diesen gegen die Nabe 10 des Radlagers abstützt. Die Befestigungsschraube 30 ist stirnseitige in eine korrespondierende Gewindeöffnung 21 des Achszapfens 20 eingeschraubt.

In Abwandlung des Ausführungsbeispiels kann stirnseitig an dem Achszapfen 20 ein Gewindeabschnitt vorgesehen sein, auf welchen als Spanneinrichtung 30 eine Befestigungsmutter aufgeschraubt ist, welche sich ihrerseits gegen die Nabe 10 abstützt.

Figur 1 zeigt das Radlager und die Seitenwelle in einem noch nicht fertig montierten Zustand, welcher vorliegend erst durch weiteres axiales Zusammenschieben von Radlager und Seitenwelle sowie anschließendes axiales Verspannen mittels der Spanneinrichtung 30 erhalten wird. Im fertig montierten Zustand stützt sich eine Schulter 22 des Achszapfens 20 gegen eine außenseitige Stirnseite 11 der Nabe 10 ab. In diesem Kontaktbereich kann es durch eine geringfügige Relativbewegung zu Knackgeräuschen kommen, welche die vorliegende Erfindung zu vermeiden trachtet. Hierzu ist die Passverbindung aus Nabe 10 und Achszapfen 20 in der nachfolgend näher erläuterten Art und Weise ausgeführt.

Die erfindungsgemäße Passverbindung beruht auf einem Verzahnungseingriff zwischen einem Verzahnungsprofil 13 am Innenumfang der Nabe 10 mit einem Verzahnungsprofil 23 an einem Außenumfangsabschnitt 24 des Achszapfens 20.

Der mit dem Verzahnungsprofil 23 versehene Außenumfangsabschnitt 24 des Achszapfens 20 ist durch einen Freistich 25 von der Schulter 22 beabstandet und erstreckt sich bis zum Stirnende 26 des Achszapfens 20.

Das Verzahnungsprofil 13 der Nabe 10 ist über ihre gesamte Verzahnungslänge konstant, d.h. Zähne und Lücken weisen in Axialrichtung der Nabe 10 stets die gleichen Abmessungen auf.

Der Achszapfen 20 weist hingegen über seine Verzahnungslänge zumindest einen ersten Abschnitt 27 und einen zweiten Abschnitt 28 mit unterschiedlichem Verzahnungsprofil auf.

Definitionsgemäß ist vorliegend der erste Abschnitt 27 einschubseitig angeordnet, d.h. von der Schulter 22 weiter als der zweite Abschnitt 28 entfernt. Als zweiter Abschnitt 28 wird vorliegend der der Schulter 22 näher liegende Abschnitt verstanden.

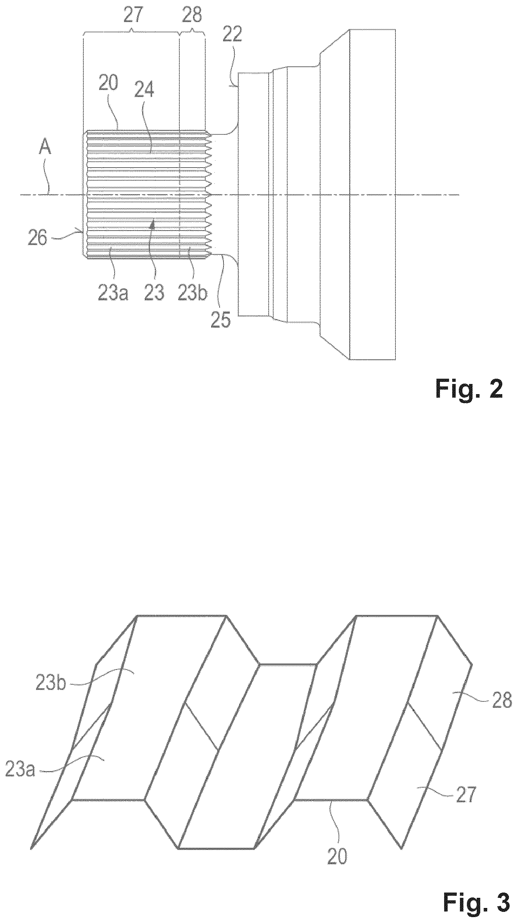

Wie Fig. 2 zeigt, weist der erste Abschnitt 27 eine größere Axiallänge als der zweite Abschnitt 28 auf. Dabei ist die Axiallänge des ersten Abschnitts 27 vorzugsweise so bemessen, dass die Spanneinrichtung 30 mindestens 2,5 Gewindeumdrehungen, vorzugsweise mindestens 3 Gewindeumdrehungen, eingeschraubt werden kann, bevor das Verzahnungsprofil 13 der Nabe 10 mit dem zweiten Abschnitt 28 in Eingriff gelangt.

Der erste Abschnitt 27 weist ein in Längsrichtung Ader Verzahnungslänge konstantes Verzahnungsprofil 23a auf, das zu dem Verzahnungsprofil 13 der Nabe 10 Spiel besitzt.

Der der schulterseitig angeordnete zweite Abschnitt 28 besitzt hingen ein Verzahnungsprofil 23b mit im Vergleich zu dem ersten Abschnitt 27 verringerten Zahnlücken, welches zu dem Verzahnungsprofil 13 der Nabe 10 spielfrei ist.

Hierdurch kann beim Zusammenfügen der Achszapfen 20 leicht von Hand in die Nabe 10 eingeschoben werden, und zwar über den Bereich des Eingriffs des ersten Abschnitts 27 mit dem Verzahnungsprofil 13 der Nabe 10. Anschließend wird die Spanneinrichtung 30 betätigt. Diese kann in dem spielbehafteten Eingriffszustand um mindestens 2,5 Gewindeumdrehungen verschraubt werden. Im dargestellten Ausführungsbeispiel bedeutet dies, dass die Befestigungsschraube 31 über mindestens 2,5 Gewindewindungen mit dem Innengewinde der Gewindeöffnung 21 des Achszapfens 20 in Eingriff steht. Hierdurch wird eine hinreichende Auszugskraft für das nachfolgende "Hereinziehen" des Achszapfens 20 in die Nabe 10 gewährleistet, bei welchem das Verzahnungsprofil 23b des zweiten Abschnitts 28 mit dem Verzahnungsprofil 13 der Nabe 10 durch Drehen der Befestigungsschraube 31 bzw. der Spanneinrichtung 30 verpresst wird. Während dieses Spannens gelangt letztlich die Schulter 22 in Anlage gegen die Nabe 10, so dass gleichzeitig auch das Radlager axial festgelegt wird.

Der zweite Abschnitt 28 mit dem zugehörigen Verzahnungsprofil 23b ist somit derart angeordnet, dass dieser erst nach einem spielbehafteten Einschieben des ersten Abschnitts 27 in die Nabe 10 durch anschließendes Anziehen der Spanneinrichtung 30 mit dem Verzahnungsprofil 13 der Nabe 10 spielfrei verpressbar ist.

Der Achszapfen 20 weist über seine Verzahnungslänge einen ersten Abschnitt 27 und einen zweiten Abschnitt 28 mit unterschiedlichem Verzahnungsprofil auf, wobei der erste Abschnitt 27 einschubseitig, von der Schulter 22 weiter als der zweite Abschnitt 28 entfernt, angeordnet ist und ein konstantes Verzahnungsprofil 23a mit Spiel zu dem Verzahnungsprofil 13 der Nabe 10 besitzt. Der zweite Abschnitt 28 liegt näher zur Schulter 22 als der erste Abschnitt 27 und weist ein Verzahnungsprofil 23b mit im Vergleich zu dem ersten Abschnitt 27 verringerten Zahnlücken auf, welches zu dem Verzahnungsprofil 13 der Nabe 10 in Umfangsrichtung spielfrei ist. Der zweite Abschnitt 28 ist derart angeordnet, dass dieser erst nach einem spielbehafteten Einschieben des ersten Abschnitts 27 in die Nabe 10 und entsprechendem Eingriff mit dem Verzahnungsprofil 13 durch anschließendes Anziehen der Spanneinrichtung 30 mit dem Verzahnungsprofil 13 der Nabe 10 spielfrei verpresst wird.

Das Verpressen des zweiten Abschnitts 28 mit dem Verzahnungsprofil 13 der Nabe 10 beim axialen Verspannen wird dadurch bewirkt, dass an dem zweiten Abschnitt 28 die Lücken zwischen den Zähnen des Verzahnungsprofils 23b in Längsrichtung A der Verzahnung kontinuierlich kleiner werden, sich also gewissermaßen in Längsrichtung A konisch oder auch mit einem anderen Verlauf verjüngen. Eine mögliche Formgebung der Verjüngung ist in Fig. 3 zum Zweck der Veranschaulichung beispielhaft vergrößert und nicht-maßstäblich dargestellt. In der Praxis liegt diese Verjüngung in der Größenordnung von einigen Hundertsteln bis wenige Zehntel Millimeter.

Die in Längsrichtung des Verzahnungsprofils 23b kleiner werdenden Lücken zwischen den Zähnen lassen sich durch Materialzunahme am Zahnfuss und/oder an den Zahnflanken im Bereich des zweiten Abschnitts 28 realisieren.

Die maximale Verkleinerung der Lücken zwischen den Zähnen am zweiten Abschnitt 28 wird bevorzugt in einem Bereich des 0,05- bis 0,35-fachen des Verzahnungsmoduls der Verzahnung am ersten Abschnitt 27 gewählt.

Die Herstellung des Verzahnungsprofils 23 am Achszapfen 20, d.h. sowohl am ersten Abschnitt 27 als auch am zweiten Abschnitt 28 kann durch Profilwalzen mit einer einzigen Profilwalze gleichzeitig erfolgen, welche hierzu entsprechend konturiert ist. Ein Nachbearbeitungsschritt kann dadurch entfallen.

Die Profilwalze weist hierzu ein negatives Verzahnungsprofil für die unterschiedlichen Verzahnungsprofile 23a und 23b des ersten und zweiten Abschnitts 28 auf. Dieses negative Verzahnungsprofil ist im Bereich für den zweiten Abschnitt von dem Bereich für den ersten Abschnitt ausgehend tiefer werdend eingeschnitten. Hierdurch wird die Zahnlücke am negativen Verzahnungsprofil breiter, am Verzahnungsprofil 23b des Achszapfens 20 umgekehrt entsprechend kleiner.

Bei konstantem Vordrehdurchmesser an dem Achszapfen ergibt sich im zweiten Abschnitt 28 ein etwas reduzierter Kopfkreisdurchmesser, da das Material im breiteren Zahn verbleibt.

Die Axiallänge der zweiten Abschnitts 28 kann mit vorzugsweise etwa 6 bis 12mm gewählt werden, beträgt also auch hier weniger als die Hälfte, gegebenenfalls auch weniger als ein Viertel, der Verzahnungslänge am Außenumfangsabschnitt 24 des Achszapfens 20.

Von dem vorstehend erläuterten Ausführungsbespiel sind zahlreiche Abwandlungen möglich.

So können die Zähne der Verzahnungsprofile im Querschnitt beispielsweise prismatisch, trapezförmig wie in Fig. 3 dargestellt oder auch mit einer anderen Querschnittsform hergestellt sein.

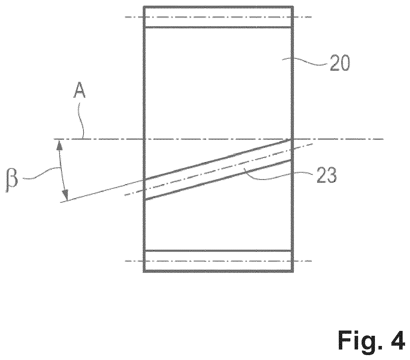

Weiterhin ist es möglich, einzelnen Abschnitten der Verzahnung zusätzlich einen Helixwinkel β zu überlagern, wie dies in Fig. 4 angedeutet ist. Dieser ist sehr klein und in Fig. 4 überproportional dargestellt. Er liegt vorzugsweise in einem Bereich von 4 bis 20 Bogenminuten.

Die Überlagerung kann auf das Verzahnungsprofil in Längsrichtung der Verzahnung an der Nabe 13 angewendet werden. Das Verzahnungsprofil 13 bleibt hierbei konstant, ist jedoch mit fortschreitender Axiallänge etwas um die Längsrichtung A verdreht.

Gleichermaßen kann ein Helixwinkel β auch am ersten Abschnitt 27 und/oder zweiten Abschnitt 28 des Achszapfens 20 vorgesehen sein, um eine stärkere Verpressung zu erzielen.

Die Profilierung der Verzahnung des Achszapfens 20 kann alternativ auch mit Hilfe eines Walzbalkens erfolgen. Ein Walzbalken ist eine gerade Stange, welche an einer Arbeitsfläche eine Negativkontur für die Herstellung der Verzahnung ausbildet. Das Werkstück rollt beim Profilwalzen mit seinem Umfang auf der entsprechend profilierten Arbeitsfläche des Walzbalkens ab, so dass sich die Profilierung des Walzbalkens aufgrund des anliegenden Drucks zwischen Werkstück und Werkzeug auf dem Umfang Werkstückes abbildet. Eine Profiländerung wie oben beschrieben kann entsprechend in dem Walzbalken realisiert werden.

Ferner kann die Passverzahnung mit partiell verjüngten Zahnlücken am Achszapfen 20 auch durch das Fertigungsverfahren Axialformen aufgebracht werden. Beim Axialformen wird das Umformwerkzeug, eine Matrize, axial gegen den eingespannten Achszapfen 20 gefahren. Am Innenumfang der Matrize ist die Negativform der herzustellenden Passverzahnung eingearbeitet.

Eine beispielsweise konische Verjüngung der Verzahnung, wie sie oben im Zusammenhang mit den Figuren 2 und 3 beschrieben wurde, kommt diesem Umformverfahren entgegen. Die Matrize kann im für den zweiten Abschnitt 28 vorgesehen Profilbereich tiefer eingeschnitten werden als im davorliegenden Profilbereich. Da dieser tiefer eingeschnittene Profilbereich bis nahe zur Schulter 22 vorgeschoben wird, ergeben sich am Achszapfen 20 schulternah wiederum in ihrer Breite kleiner werdende Zahnlücken, während schulterfern im ersten Abschnitt 27 größere Zahnlücken erhalten werden. Es ist dabei unproblematisch, dass beim Verschieben der Matrize in Axialrichtung A des Achszapfens 20 der tiefer eingeschnittene Bereich zuerst über den ersten Abschnitt 27 bewegt wird, da dessen abschließende Formgebung durch den nachfolgenden weniger tief eingeschnittenen Profilbereich der Matrize bestimmt wird. Die entsprechend schmäleren Zähne am tiefer eingeschnittenen Profilbereich der Matrize können nach Formung des zweiten Abschnitts 28 problemlos über den fertiggeformten ersten Abschnitt 27 wieder zurück gezogen werden.

Die Erfindung wurde vorstehend anhand eines Ausführungsbeispiels und weiterer Abwandlungen näher erläutert. Diese dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf das konkret beschriebene Ausführungsbeispiel und die Abwandlungen beschränkt, sondern umfasst alle durch die Patentansprüche definierten Ausgestaltungen.

### Bezugszeichenliste

- 1: Radlager
- 2: Gelenkaußenteil
- 10: Nabe
- 11: Stirnseite der Nabe 10
- 13: Verzahnungsprofil der Nabe 10
- 20: Achszapfen
- 21: Gewindeöffnung
- 22: Schulter
- 23: Verzahnungsprofil
- 23a: Verzahnungsprofil des ersten Abschnitts 27
- 23b: Verzahnungsprofil des ersten Abschnitts 28
- 24: Außenumfangsabschnitt des Achszapfens 20
- 25: Freistich
- 26: Stirnende des Achszapfens 20
- 27: erste Abschnitt
- 28: zweiter Abschnitt
- 30: Spannrichtung
- 31: Befestigungsschraube
- 32: Kopf
- 40: Radflansch
- A: Längsrichtung der Verzahnungslänge = Axialrichtung des Achszapfens 20
- P1: Profilwalze
- P2: unverzahnte Rolle (Scheibe)

## Patentansprüche

1. Passverbindung, umfassend
eine Nabe (10) mit einem Verzahnungsprofil (13) am Innenumfang,
einen Achszapfen (20) mit einem Verzahnungsprofil (23) an einem Außenumfangsabschnitt (24) sowie einer Schulter (22) zur axialen Abstützung und/oder Anlage gegen die Nabe (10), und
eine Spanneinrichtung (30) zum axialen Verspannen des Achszapfens (20) mit der Nabe (10),
die Nabe (10) über ihre Verzahnungslänge ein konstantes Verzahnungsprofil (13) aufweist und
der Achszapfen (20) über seine Verzahnungslänge einen ersten Abschnitt (27) und einen zweiten Abschnitt (28) mit unterschiedlichem Verzahnungsprofil (23a, 23b) aufweist, wobei der erste Abschnitt (27) einschubseitig, von der Schulter (22) weiter als der zweite Abschnitt (28) entfernt, angeordnet ist und ein konstantes Verzahnungsprofil (23a) aufweist, das zu dem Verzahnungsprofil (13) der Nabe (10) Spiel besitzt, und der zweite Abschnitt (28) schulterseitig angeordnet ist und ein Verzahnungsprofil (23b) mit im Vergleich zu dem ersten Abschnitt (27) verringerten Zahnlücken aufweist, welches zu dem Verzahnungsprofil (13) der Nabe (10) spielfrei ist, und
wobei der zweite Abschnitt (28) derart angeordnet ist, dass dieser erst nach einem spielbehafteten Einschieben des ersten Abschnitts (27) in die Nabe (10) durch anschließendes Anziehen der Spanneinrichtung (30) mit dem Verzahnungsprofil (13) der Nabe (10) spielfrei verpresst wird,
**dadurch gekennzeichnet,**
**dass** an dem zweiten Abschnitt (28) die Lücken zwischen den Zähnen des Verzahnungsprofils (23b) in Längsrichtung (A) der Verzahnung kontinuierlich kleiner werden.

2. Passverbindung nach Anspruch 1, **dadurch gekennzeichnet, dass** an dem zweiten Abschnitt (28) die Lücken zwischen den Zähnen des Verzahnungsprofils (23b) in Längsrichtung (A) der Verzahnung kontinuierlich konisch kleiner werden.

3. Passverbindung nach Anspruch 1 oder 2, **dadurch gekennzeichnet, dass** die in Längsrichtung (A) des Verzahnungsprofils (23b) kleiner werdenden Lücken zwischen den Zähnen durch Materialzunahme am Zahnfuss und/oder an den Zahnflanken bewirkt wird.

4. Passverbindung nach einem der Ansprüche 1 bis 3, **dadurch gekennzeichnet, dass** die maximale Verkleinerung der Lücken zwischen den Zähnen am zweiten Abschnitt (28) im Bereich des 0,05- bis 0,35-fachen des Verzahnungsmoduls am ersten Abschnitt (27) liegt.

5. Passverbindung nach einem der Ansprüche 1 bis 4, **dadurch gekennzeichnet, dass** das Verzahnungsprofil (13, 23, 23a, 23b) in Längsrichtung (A) der Verzahnung an der Nabe (10) und/oder am ersten und/oder zweiten Abschnitt (27, 28) des Achszapfens (20) einen Helixwinkel β im Bereich von 4 bis 20 Bogenminuten aufweist.

6. Passverbindung nach einem der Ansprüche 1 bis 5, **dadurch gekennzeichnet, dass** von dass an dem zweiten Abschnitt (28) die Lücken zwischen den Zähnen des Verzahnungsprofils (23b) in Längsrichtung (A) der Verzahnung um einige Hundertstel bis wenige Zehntel Millimeter kleiner werden.

7. Passverbindung nach einem der Ansprüche 1 bis 6, **dadurch gekennzeichnet, dass** bei konstantem Vordrehdurchmesser an dem Achszapfen (20) sich im zweiten Abschnitt (28) ein etwas reduzierter Kopfkreisdurchmesser ergibt.

8. Verfahren zur Herstellung einer Passverbindung nach einem der Ansprüche 1 bis 7, **dadurch gekennzeichnet, dass** das Verzahnungsprofil (23a, 23b) des ersten und zweiten Abschnitts (27, 28) gleichzeitig mittels einer Walze oder eines Walzbalkens durch Profilwalzen oder aber durch Axialformen hergestellt wird, wobei die Walze oder der Walzbalken für das Profilwalzen bzw. die Matrize für das Axialformen ein negatives Verzahnungsprofil aufweist, welches im Bereich für den zweiten Abschnitt (28) von dem Bereich für den ersten Abschnitt (27) ausgehend tiefer werdend eingeschnitten ist.

## Claims

1. Spline connection, comprising
a hub (10) having a toothing profile (13) on the inner circumference,
an axle journal (20) having a toothing profile (23) on an outer circumferential portion (24), and also a shoulder (22) for axial support and/or abutment against the hub (10), and
a tensioning device (30) for axially bracing the axle journal (20) with the hub (10),
the hub (10) has a constant toothing profile (13) over its toothing length and
the axle journal (20) has, over its toothing length, a first portion (27) and a second portion (28) with different toothing profiles (23a, 23b),
wherein the first portion (27) is arranged on the insertion side, so as to be further away from the shoulder (22) than the second portion (28), and has a constant toothing profile (23a) which has play with respect to the toothing profile (13) of the hub (10), and the second portion (28) is arranged on the shoulder side and has a toothing profile (23b) which has reduced tooth spaces compared with the first portion (27) and which is play-free with respect to the toothing profile (13) of the hub (10), and wherein the second portion (28) is arranged in such a way that only after the first portion (27) has been inserted with play into the hub (10) can said second portion be compressed with the toothing profile (13) of the hub (10) in a play-free manner by subsequent tightening of the tensioning device (30),
**characterized in that**, on the second portion (28), the spaces between the teeth of the toothing profile (23b) become continuously smaller in a longitudinal direction (A) of the toothing.

2. Spline connection according to Claim 1, **characterized in that**, on the second portion (28), the spaces between the teeth of the toothing profile (23b) become continuously conically smaller in a longitudinal direction (A) of the toothing.

3. Spline connection according to Claim 1 or 2, **characterized in that** the spaces between the teeth that become smaller in the longitudinal direction (A) of the toothing profile (23b) are brought about by an increase in material at the tooth root and/or at the tooth flanks.

4. Spline connection according to one of Claims 1 to 3, **characterized in that** the maximum reduction in the spaces between the teeth on the second portion (28) lies in the range of 0.05 to 0.35 times the toothing module on the first portion (27).

5. Spline connection according to one of Claims 1 to 4, **characterized in that** the toothing profile (13, 23, 23a, 23b) in the longitudinal direction (A) of the toothing on the hub (10) and/or on the first and/or second portion (27, 28) of the axle journal (20) has a helix angle β in the range of 4 to 20 arc minutes.

6. Spline connection according to one of Claims 1 to 5, **characterized in that**, on the second portion (28), the spaces between the teeth of the toothing profile (23b) become smaller in a longitudinal direction (A) of the toothing by a few hundredths to a few tenths of a millimetre.

7. Spline connection according to one of Claims 1 to 6, **characterized in that**, in the case of a constant preturning diameter on the axle journal (20), a somewhat reduced tip circle diameter is produced in the second portion (28).

8. Method for producing a spline connection according to one of Claims 1 to 7,
**characterized in that** the toothing profile (23a, 23b) of the first and second portions (27, 28) is produced at the same time by means of a roll or a rolling beam by profile rolling or alternatively by axial forming, wherein the roll or the rolling beam for the profile rolling or the die for the axial forming has a negative toothing profile which, in the region for the second portion (28), proceeding from the region for the first portion (27), is cut in a deepening manner.

## Revendications

1. Liaison ajustée, comprenant
un moyeu (10) avec un profil de denture (13) sur la périphérie intérieure,
un tourillon (20) avec un profil de denture (23) sur une section périphérique extérieure (24) ainsi qu'un épaulement (22) pour le support et/ou l'appui axial contre le moyeu (10), et
un dispositif de serrage (30) pour le serrage axial du tourillon (20) avec le moyeu (10),
le moyeu (10) présentant un profil de denture constant (13) sur sa longueur de denture et
le tourillon (20) présentant sur sa longueur de denture une première section (27) et une deuxième section (28) avec un profil de denture différent (23a, 23b),
la première section (27) étant agencée, côté insertion, plus éloignée de l'épaulement (22) que la deuxième section (28) et présentant un profil de denture constant (23a) qui possède un jeu par rapport au profil de denture (13) du moyeu (10), et la deuxième section (28) étant agencée côté épaulement et présentant un profil de denture (23b) avec des entredents réduits en comparaison de la première section (27), qui est sans jeu par rapport au profil de denture (13) du moyeu (10), et
la deuxième section (28) étant agencée de telle sorte que celle-ci n'est comprimée sans jeu avec le profil de denture (13) du moyeu (10) qu'après une insertion avec jeu de la première section (27) dans le moyeu (10) par serrage consécutif du dispositif de serrage (30),
**caractérisée en ce**
**qu'**au niveau de la deuxième section (28), les espaces entre les dents du profil de denture (23b) diminuent continuellement dans la direction longitudinale (A) de la denture.

2. Liaison ajustée selon la revendication 1, **caractérisée en ce qu'**au niveau de la deuxième section (28), les espaces entre les dents du profil de denture (23b) diminuent continuellement sous forme conique dans la direction longitudinale (A) de la denture.

3. Liaison ajustée selon la revendication 1 ou 2, **caractérisée en ce que** les espaces entre les dents, qui diminuent dans la direction longitudinale (A) du profil de denture (23b), sont provoqués par une augmentation de matière au pied de dent et/ou sur les flancs de dent.

4. Liaison ajustée selon l'une quelconque des revendications 1 à 3, **caractérisée en ce que** la réduction maximale des espaces entre les dents au niveau de la deuxième section (28) se situe dans la plage de 0,05 à 0,35 fois le module de denture au niveau de la première section (27).

5. Liaison ajustée selon l'une quelconque des revendications 1 à 4, **caractérisée en ce que** le profil de denture (13, 23, 23a, 23b) présente un angle d'hélice β dans la plage de 4 à 20 minutes d'arc dans la direction longitudinale (A) de la denture au niveau du moyeu (10) et/ou au niveau de la première et/ou de la deuxième section (27, 28) du tourillon (20).

6. Liaison ajustée selon l'une quelconque des revendications 1 à 5, **caractérisée en ce qu'**à partir de la deuxième section (28), les espaces entre les dents du profil de denture (23b) diminuent de quelques centièmes à quelques dixièmes de millimètres dans la direction longitudinale (A) de la denture.

7. Liaison ajustée selon l'une quelconque des revendications 1 à 6, **caractérisée en ce que**, pour un diamètre de pré-rotation constant sur le tourillon (20), on obtient un diamètre de cercle de tête légèrement réduit dans la deuxième section (28).

8. Procédé de fabrication d'une liaison ajustée selon l'une quelconque des revendications 1 à 7, **caractérisé en ce que** le profil de denture (23a, 23b) des première et deuxième sections (27, 28) est réalisé simultanément au moyen d'un cylindre ou d'une barre de cylindrage par cylindrage de profilé ou bien par moulage axial, le cylindre ou la barre de cylindrage pour le cylindrage de profilé ou bien la matrice pour le moulage axial présentant un profil de denture négatif qui est découpé dans la zone pour la deuxième section (28) en s'approfondissant à partir de la zone pour la première section (27).
